# EUROPÄISCHE PATENTSCHRIFT

(11) **EP 2 585 339 B1**
(45) Veröffentlichungstag und Bekanntmachung des Hinweises auf die Patenterteilung: **25.10.2017**
(21) Anmeldenummer: 11735780.6
(22) Anmeldetag: 10.06.2011
(51) Int. Cl.: B29C 49/04, B60N 2/48, B60N 2/68, B29L 31/00

(54) **RÜCKENLEHNE EINES KRAFTFAHRZEUGSITZES**
BACKREST OF MOTOR VEHICLE SEAT
DOSSIER DE SIÈGE DE VÉHICULE À MOTEUR

(30) Priorität: 23.06.2010 DE 102010024715
(43) Veröffentlichungstag der Anmeldung: 01.05.2013
(73) Patentinhaber: Volkswagen Aktiengesellschaft, 38440 Wolfsburg (DE)
(72) Erfinder: LÜBBERS, Karl-Heinz, 31234 Edemissen (DE)
(86) Internationale Anmeldenummer: PCT/EP2011/002848
(87) Internationale Veröffentlichungsnummer: WO 2011/160779

(56) Entgegenhaltungen:
- WO-A1-01/92051
- JP-A- 9 084 654
- US-A- 5 713 634

## Beschreibung

Die Erfindung betrifft eine Rückenlehne eines Kraftfahrzeugsitzes gemäß dem Oberbegriff des Anspruchs 1 sowie ein Verfahren zur Herstellung einer solchen Rückenlehne.

Aus der DE 88 15 953 U ist eine aus Kunststoff gebildete Rückenlehne für einen Kraftfahrzeugsitz bekannt, die aus einer Außenschale und einer Innenschale aufgebaut ist. In dem Zwischenraum zwischen diesen Schalen sitzen Arretierhülsen für Tragstangen einer aufsteckbaren Kopfstütze. Diese Arretierhülsen bilden mit der Innenschale eine Baueinheit, so dass zuerst die Arretierhülsen an einer Innenschale und diese anschließend an der Außenschale befestigt werden. Um die Verbindung der Arretierhülsen mit der Innenschale crashsicher auszugestalten, sind Stäbe vorgesehen, die diesen Verbindungsbereich gegen die Außenschale abstützen. Ein solcher Aufbau ist verhältnismäßig aufwändig, da nicht nur die Innenschale mit der Außenschale, sondern auch die Stege beim Zusammenbau verschweißt werden müssen. Zudem müssen die einzelnen Bauteile für einen sicheren Zusammenbau toleranzgenau gefertigt sein.

Eine aus gegenüber liegenden Wandteilen ähnlich ausgebildete Autositzlehne, die ebenfalls aus einem Kunststoffmaterial hergestellt ist, geht aus der Druckschrift WO 01/92051 A1 hervor.

In der Rückenlehne vorgehaltenen Aussparungen werden üblicherweise Kopfstützen angeordnet, die in Führungshülsen gehaltert werden, wobei die Führungshülsen in geeigneter Weise innerhalb der Aussparung an der Struktur der Rückenlehne befestigt sind. Solche Lösungen sind beispielsweise aus den Druckschriften JP 9 084654 A und US 5 713 634 A bekannt.

Aufgabe der vorliegenden Erfindung ist es, eine Rückenlehne für einen Kraftfahrzeugsitz so auszubilden, dass dieser eine - insbesondere höhenverstellbare - Kopfstütze aufweist, verhältnismäßig leicht ausgebildet ist und mit wenigen Prozessschritten hergestellt werden kann.

Diese Aufgabe wird mit einer Rückenlehne mit den Merkmalen des Patentanspruchs 1 gelöst.

Ausgangspunkt der Erfindung ist eine Rückenlehne eines Kraftfahrzeugsitzes mit einem Kunststoffkörper, der überwiegend die Form der Rückenlehne bestimmt und/oder überwiegend zur Stabilität der Rückenlehne beiträgt, und mindestens einer Führungshülse für eine Tragstange einer Kopfstütze, wobei der Kunststoffkörper an seinem oberen Endabschnitt mindestens eine Aussparung aufweist, in der ein Einsatz befestigt ist, in dem die mindestens eine Führungshülse sitzt (wie zum Beispiel aus den o.g. JP 9 084654 A und US 5 713 634 A bekannt). Erfindungsgemäß ist vorgesehen, dass der Einsatz und die mindestens eine Führungshülse einstückig aus einem Kunststoff ausgebildet sind. Die einstückige Ausbildung hat in vorteilhafter Weise den Effekt, dass weniger Teile hergestellt und bei der Montage des Kraftfahrzeugsitzes zusammengesetzt werden müssen.

Der Patentanspruch 11 gibt die Verfahrensschritte zur Herstellung und zum Zusammenbau einer solchen Rückenlehne wieder.

Die Unteransprüche zeigen vorteilhafte Ausgestaltungen der Erfindung. Die Rückenlehne weist einen Kunststoffkörper auf, der im Wesentlichen die Form der Rückenlehne bestimmt und/oder überwiegend zu deren Stabilität beiträgt. Der Kunststoffkörper bildet hierbei die Vorderwand und die Rückwand der Rückenlehne, wobei die Vorderwand und die Rückwand vorzugsweise voneinander beabstandet sind. Die Fläche der Vorderseite und der Rückseite des Kunststoffkörpers entspricht mindestens 51% der Fläche der Vorder- und Rückseite der fertigen Rückenlehne, vorteilhaft mindestens 65 % und insbesondere mindestens 75%. Der Kunststoffkörper kann auch so ausgebildet sein, dass er zusammen mit dem Einsatz die gesamte Fläche der Rückenlehne bestimmt, bei einer Aufpolsterung des Kunststoffkörpers zur Erhöhung des Sitzkomforts ist der Kunststoffkörper bezüglich der Rückenlehnenfläche jedoch etwas kleiner, dann beträgt die Fläche der Vorderseite und Rückseite des Kunststoffkörpers zusammen mit dem Einsatz üblicherweise ≤ 95% der Fläche der Vorder- und Rückseite der Rückenlehne.

Der Kunststoffkörper ist vorteilhaft zumindest auf seiner Sitzseite (Vorderwand) mit einem Bezug versehen, der insbesondere auch mit einer Unterpolsterung aufgebracht ist. Gleichzeitig benötigt der Kunststoffkörper für eine genügende Crashstabilität vorteilhaft keinerlei weitere Verstärkungen. Je nach Konstruktion können jedoch noch zusätzliche Versteifungen aus Kunststoff oder Metall vorgesehen werden.

Die Rückenlehne weist weiterhin mindestens eine Führungshülse für eine Tragstange einer Kopfstütze auf, wobei meist genau zwei Tragstangen und Führungshülsen je Kopfstütze vorgesehen werden. Die Rückenlehne kann hierbei als Einsitzer, Zweisitzer und Dreisitzer aufgebaut sein, weitere Sitze werden nur in Ausnahmefällen eingeformt. Vorzugsweise ist die Rückenlehne (nach vorn) umklappbar und vorteilhaft Teil einer geteilt umlegbaren Rückbanklehne, wobei - je nach Ausführung - auch die Sitzfläche als Ganzes oder geteilt (nach vorn) umklappbar sein kann.

Für eine einfache und crashsichere Montage einer Kopfstütze weist der Kunststoffkörper im Verlauf seiner Oberkante eine Aussparung auf, in der ein Einsatz befestigt ist, in dem die mindestens eine Führungshülse sitzt.

Wie erwähnt wird erfindungsgemäß die Führungshülse gemeinsam mit dem Einsatz einstückig aus einem Kunststoff hergestellt, wobei sich die Ausbildung als Kunststoffspritzgussteil bewährt hat.

Vorteilhaft wird der Einsatz mit der Führungshülse so ausgebildet, dass sie zur direkten Aufnahme der Tragstange einer Kopfstütze geeignet ist. Das heißt, es muss keine weitere Führungshülse für die Tragstange in die mit dem Einsatz verbundene Führungshülse eingesetzt werden. Insbesondere werden hierfür entsprechende Einformungen für Rastelemente (z.B. aus Federdraht) und Sicherungselemente der Tragstange eingebracht, so dass die Kopfstütze in ihrer Höhe verstellbar, sicherbar und/oder entnehmbar ist.

Der Kunststoffkörper wird vorzugsweise als Blasformkörper hergestellt, wodurch die Rückenlehne aus verhältnismäßig wenigen Einzelteilen aufgebaut werden kann. Gleichzeitig erlaubt die Herstellung als Blasformkörper auf einfache Weise eine toleranzgenaue Fertigung für die Aufnahme des Einsatzes bei gleichzeitig genügender Stabilität im Falle eines Crashes.

Die Verbindung des Einsatzes mit dem Kunststoffkörper oder des Kunststoffkörpers mit dem Einsatz ist vorteilhaft überlappend, wobei die jeweiligen Randbereiche des Einsatzes und des Kunststoffkörpers im Bereich der Aussparung miteinander verbunden oder miteinander korrespondierend ausgestaltet sind. Vorzugsweise werden zwei gegenüber liegende Randbereiche verbunden, bei einer in etwa rechteckig ausgeführten Aussparung in der Lehnenoberkante sind es die beiden Seiten der Aussparung, die sich an die Oberkante der Lehne anschließen. Eine solche Verbindung ist sehr stabil und somit crashsicher.

Für eine besonders einfache Art der Verbindung ist mindestens einer der Randbereiche an dem Einsatz oder an der Aussparung als Flansch ausgebildet, wobei dieser Flansch sich vorteilhaft entlang der Ebene der Rückenlehne erstreckt. Der Flansch bildet dabei den überlappenden Randbereich. Ein solcher Flansch kann an dem Einsatz leicht spritztechnisch und an dem Kunststoffkörper beim Blasformen durch eine entsprechende Quetschung des Kunststoffschlauches hergestellt werden. Besonders bevorzugt werden die Randbereiche so ausgebildet, dass ein Randbereich den anderen umfasst, also ein Randbereich eine Nut, die entweder aus zwei parallelen Flanschen gebildet ist oder in einen breiteren Körper (Rückenlehne oder Einsatz) insbesondere bei der Herstellung eingeformt wird. Ein solches Umfassen erlaubt eine Verbindung der beiden Bauteile mit hoher Stabilität bereits schon durch Einschieben des Einsatzes in die Rückenlehne.

In einer bevorzugten Ausführungsform weist eine Verbindung des Einsatzes an der Rückenlehne, wobei ein Randbereich den anderen umfasst, eine Rastverbindung auf, die einen festen Sitz des Einsatzes in der Aussparung sicherstellt. Die Rast lässt sich einfach durch entsprechende Verprägungen in dem Flansch herstellen. Eine solche Rast hat zudem den Vorteil, dass beim Zusammensetzen der Einzelteile eine spürbare und sichere Positionierung der Bauteile zueinander erreicht wird.

Je nach Stabilität einer solchen Rastverbindung kann auf eine weitere Befestigung der beiden Bauteile miteinander verzichtet werden, vorteilhaft erfolgt die Verbindung des Kunststoffkörpers mit dem Einsatz jedoch insbesondere durch Verschweißen, wobei Ultraschallverschweißen eine einfache und sichere Art der Verbindung ist. Weiterhin können die beiden Bauteile auch verklebt oder mit einem Durchtrittsmittel verbunden werden, wobei insbesondere Vernieten und Verschrauben zum Einsatz kommt. Das Vernieten oder Verschrauben kann hierbei auch mit Kunststoffkörpern erfolgen, wodurch eine besonders hohe Recyclingfähigkeit der Rückenlehne gegeben ist.

In einer weiteren Ausführungsform weist mindestens ein zu der Aussparung hin gerichteter Randbereich des Kunststoffkörpers eine Ausnehmung auf, in die mindestens ein Randbereich des Einsatzes eingreift. Durch die Ausgestaltung der Randbereiche des Kunststoffkörpers als Führung für die Randbereiche des Einsatzes wird eine hohe Kraftaufnahme insbesondere im Fall eines Unfalls bzw. Crashs erreicht.

Der Einsatz kann in seiner Höhe so ausgeführt sein, dass er bei vollständig eingeschobener Kopfstütze die Tragstange vollständig aufnimmt. Vorteilhaft ist die Höhe des Einsatzes jedoch deutlich kürzer, so dass die Tragstangenenden bei vollständig eingeschobener Kopfstütze am unteren Ende des Einsatzes herausschauen. Hierbei wird vorteilhaft der Kunststoffkörper mit länglichen Einbuchtungen versehen, in die sich diese Enden der Tragstangen erstrecken. Hierdurch wird erreicht, dass eine sich an die Rückenlehne anlehnende Person sich durch die Tragstangenenden nicht gestört fühlt.

Der Kunststoffkörper wird - wie bereits beschrieben - vorzugsweise durch Blasformen hergestellt. Hierbei wird ein schmelzflüssiger Kunststoffschlauch in eine Blasform eingeklemmt und in dieser aufgeblasen. Der Hohlraum der Blasform bestimmt dabei im Wesentlichen die Gestalt der Rückenlehne und klemmt in derem oberen Endbereich einen Teil des Kunststoffschlauches ab, wodurch eine Aussparung entsteht. Anschließend wird am verfestigten Kunststoffmaterial im Bereich der Aussparung der Einsatz befestigt, der eine oder mehrere Hülsen für eine Tragstange bzw. Tragstangen einer Kopfstütze aufweist.

Das Abklemmen eines Teils des Kunststoffschlauchs beim Blasformen hat den Vorteil, dass hierbei gleich flanschartige Abstellungen in die Aussparung eingebracht werden können, an denen anschließend der Einsatz befestigt wird. Je nach Konstruktion kann beim Blasformen die Aussparung auch durch eine Einkragung innerhalb der Blasform erreicht werden, wobei diese vorteilhaft flanschartige Abstellungen aufweist, die im Kunststoffkörper Nuten bilden. Anschließend wird dann der Einsatz in die Nuten durch Einschieben eingesetzt und rastend oder auf andere Weise befestigt.

Erfindungsgemäß kann für eine Kopfstütze, die mehrere Tragstangen aufweist, für jede Tragstange ein eigener Einsatz in dem Kunststoffkörper vorgesehen sein. Vorteilhaft wird der Einsatz und die zugehörige Aussparung jedoch so ausgebildet, dass jeder Einsatz genau eine Kopfstütze trägt, das heißt im Regelfall zwei Hülsen für zwei Tragstangen der Kopfstütze aufweist. Besonders vorteilhaft kann erfindungsgemäß ein Kunststoffkörper für mehrere Fahrzeugtypen vorgesehen werden, wobei mehrere Einsätze vorgesehen sind, die sich durch die Rechts-Links-Position der Hülse oder Hülsen unterscheiden. Hierdurch lässt sich der mittige Abstand einer Sitzposition vom Rand der Rückenlehne über mehrere Zentimeter hin verschieben, d. h. entsprechend dem jeweiligen Kraftfahrzeug zuordnen. Hierdurch kann mit einem Formteil, insbesondere Blasformteil eine größere Anzahl von Kunststoffkörpern für Rückenlehnen gefertigt werden, wobei nur das kleine und damit preiswertere Einsatzteil variiert, d. h. mit verschiedenen Formen hergestellt wird. Erfindungsgemäß kann die Mittellage der Kopfstütze so um bis zu 2 cm und insbesondere um bis zu 5 cm versetzt werden.

Die Erfindung wird im Folgenden anhand von Ausführungsbeispielen näher beschrieben.

Es zeigen:
- Figur 1: eine erfindungsgemäße Rückenlehne mit aufgesetzter Kopfstütze;
- Figur 2: einen Schnitt durch Figur 1 entlang der Linie II - II;
- Figur 3: einen Schnitt analog Figur 2 mit nur einer Führungshülse;
- Figur 4: den Ausschnitt der Rückenlehne ohne eingesetzten Einsatz:
- Figur 5: einen Schnitt durch Figur 1 entlang der Linie II - II gemäß einem zweiten Ausführungsbeispiel;
- Figur 6: einen Schnitt analog Figur 5 mit nur einer Führungshülse und
- Figur 7: den Ausschnitt der Rückenlehne ohne eingesetzten Einsatz gemäß einem zweiten Ausführungsbeispiel.

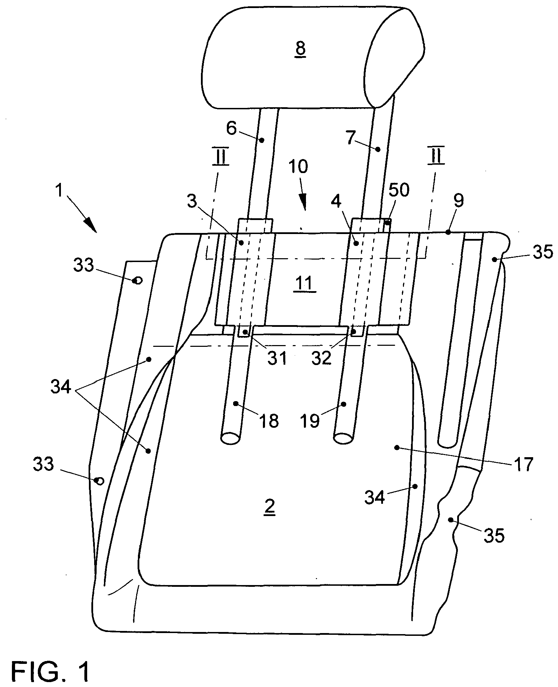

Die in Figur 1 abgebildete Rückenlehne 1 ist ohne zugehörige Polsterung und ohne Bezug dargestellt, die für Rückenlehnen der beschriebenen Art üblich und typisch sind. Die Form und Stabilität der Rückenlehne 1 wird fast ausschließlich von einem Kunststoffkörper 2 bestimmt, der an seinem oberen Endabschnitt 9 eine Aussparung 10 aufweist. In dieser Aussparung 10 sitzt ein Einsatz 11, der Führungshülsen 3, 4 für Tragstangen 6, 7 einer Kopfstütze 8 aufweist. An der Führungshülse 4 ist am oberen Ende eine Verstellsicherung 50 angebracht, die die Kopfstütze 8 in an sich bekannter Weise sichert, so dass diese nur bei eingedrückter Verstellsicherung 50 entnehmbar ist.

In der Vorderseite 17 des Kunststoffkörpers 2 sind unterhalb der Führungshülsen 3, 4 Einbuchtungen 18, 19 eingebracht, in die sich die unteren Enden 31 und 32 der Tragstangen 6 und 7 bei vollständig eingeschobener Kopfstütze 8 erstrecken. Weiterhin weist der Kunststoffkörper 2 Anschlagpunkte 33 auf, an denen Beschläge für eine Verriegelung der Lehne an einer Karosserie (nicht dargestellt) und/oder ein Bezug befestigt werden können.

In dem Kunststoffkörper 2 sind weiterhin Auswölbungen 34 eingeformt, die eine Rückenkontur für eine Person bilden.

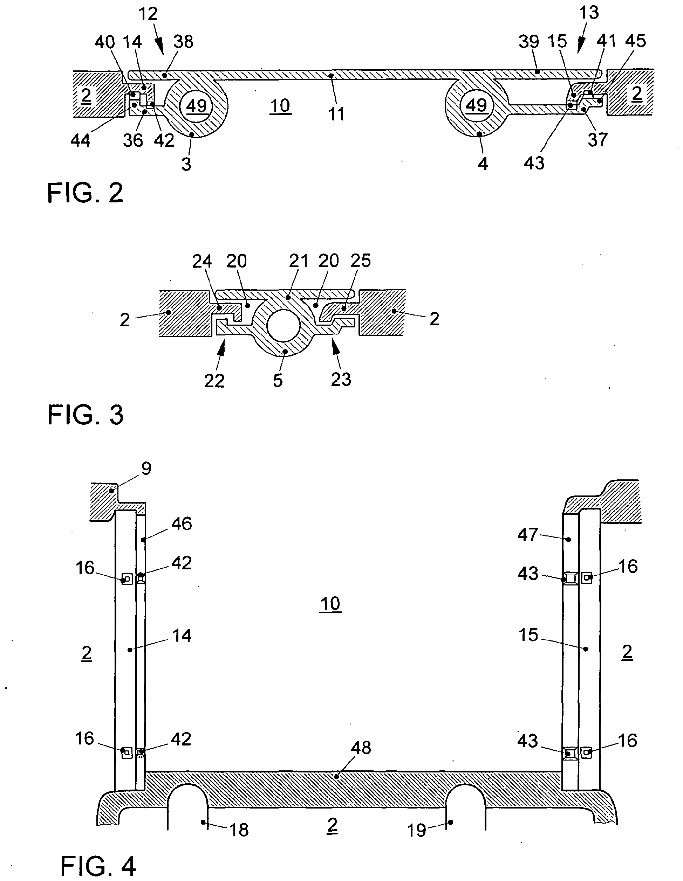

Die rechte Seite (von vorne betrachtet) des Kunststoffkörpers 2 weist Ausformungen 35 auf, die in an sich bekannter Weise der Verbindung mit einer benachbarten Rückenlehne dienen, so dass Teile der gesamten (nicht dargestellten) Rückbanklehne einzeln umklappbar sind. In der Figur 2 sind die Führungshülsen 3 und 4 sowie die einzelnen Randbereiche, über die der Kunststoffkörper 2 und der Einsatz 11 aneinander befestigt werden, im Schnitt dargestellt. Die Randbereiche 12 und 13 des Einsatzes 11 sind jeweils durch vordere 36 und 37 und hintere 38 und 39 Flansche gebildet, die die flanschartigen Randbereiche 14 und 15 des Kunststoffkörpers 2 umfassen. Die vorderen Flansche 36 und 37 sowie die Randbereiche 14 und 15 des Kunststoffkörpers 2 weisen dabei nasenartige Vorsprünge 40 und 41 bzw. 42 und 43 auf, die beim Zusammenschieben der Teile in buchtförmige Rasten 16 eingreifen (Figur 4). Die Vorsprünge 40 bis 43 allein und optional auch Abstellungen 44 und 45 in den vorderen Flanschen 36 und 37 und Abstellungen 46 und 47 am Rand der Aussparung 10 stellen sicher, dass der Einsatz 11 nicht verdreht einbaubar ist. Hierzu ist die Abstellung 45 etwas breiter ausgeführt als die Abstellung 44.

Die Position der Führungshülsen 3 und 4 ist nicht mittig in dem Einsatz 11, sondern ist etwas nach links (in Draufsicht) verschoben. In einer weiteren Ausführungsform des Einsatzes (nicht dargestellt) können die Führungshülsen weiter rechts sitzen, wodurch eine andere Sitzposition in ihrer Mittellage definiert wird. Gleichzeitig ist es auch möglich, Kopfstützen mit anderem Abstand der Tragstangen oder auch, wie in Figur 3 dargestellt, mit einer einzelnen Tragstange aufzunehmen. Die Führungshülsen können insbesondere für Konstruktionen mit einer einzigen Tragstange einen länglichen Querschnitt aufweisen, der der Tragstangenform angepasst ist.

Der in Figur 3 gezeigte Einsatz 21 sitzt in einer schmalen Aussparung 20 und weist nur eine Führungshülse 5 auf. Die zugehörigen Randbereiche 24 und 25 des Kunststoffkörpers 2 sowie 22 und 23 des Einsatzes 21 können wie zuvor ausgebildet sein. Für eine Kopfstütze mit zwei Tragstangen werden entsprechend zwei solcher Einsätze 21 in den zugehörigen Kunststoffkörper verbaut. Eine solche Ausbildung ist jedoch aufwändiger und daher nur in besonderen Ausführungsformen wirtschaftlich.

In Figur 4 ist der Aussparungsbereich 10 des Kunststoffkörpers 2 ohne den Einsatz 11 dargestellt, so dass die Rastelemente 16 bzw. 42 und 43 gut zu erkennen sind. Weiterhin sind die Einbuchtungen 18 und 19 dargestellt, die mit den Durchgangsöffnungen 49 der Führungshülsen 3 und 4 bei eingesetztem Einsatz 11 fluchten.

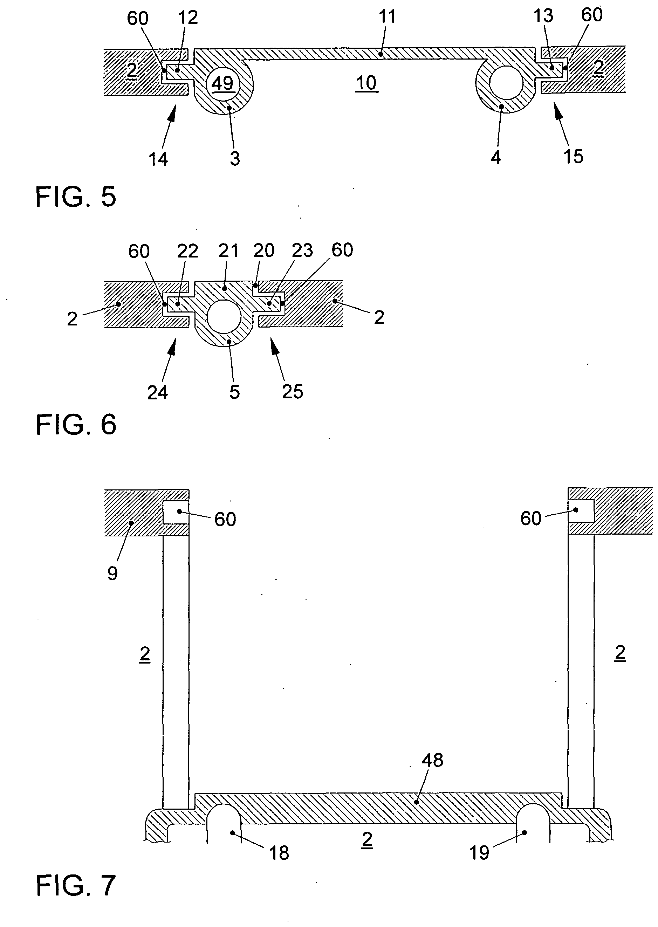

In der Figur 5 sind die Führungshülsen 3 und 4 sowie die Randbereiche, über die der Kunststoffkörper 2 und der Einsatz 11 aneinander befestigt werden gemäß einer zweiten Ausführungsform, im Schnitt dargestellt. Die Randbereiche 12 und 13 des Einsatzes 11 sind derart ausgestaltet, dass diese in eine Ausnehmung 60, vorzugsweise in Form einer Nut, in den Randbereichen 14 und 15 des Kunststoffkörpers 2 eingreifen. Die Randbereiche 14 und 15 des Kunststoffkörpers 2 dienen als Führung für die als Führungselemente ausgestalteten Randbereiche 12 und 13 des Einsatzes 11. Der Einsatz 11 wird bevorzugt in den Kunststoffkörper 2 eingeschoben und verrastet.

Durch die Ausgestaltung der Randbereiche 12, 13 des Einsatzes 11 und der Randbereiche 14, 15 des Kunststoffkörpers 2 in Form einer Führung, bevorzugt einer Gleitführung, und zugeordneten Führungselementen wird eine hohe Kraftaufnahme im Fall eines Unfalls bzw. Crashs erreicht, so dass ein Herauslösen des Einsatzes 11 aus dem Kunststoffkörpers 2 minimiert wird.

Der in der Figur 6 gezeigte Einsatz 21 sitzt in einer schmalen Aussparung 20 und weist nur eine Führungshülse 5 auf. Die Randbereiche 24 und 25 des Kunststoffkörpers 2 sowie 22 und 23 des Einsatzes 5 sind wie in Figur 5 beschrieben ausgebildet. Für eine Kopfstütze mit zwei Tragstangen werden zwei solcher Einsätze 21 in den Kunststoffkörper 2 eingebaut.

In Figur 7 ist der Aussparungsbereich 10 des Kunststoffkörpers 2 ohne den Einsatz 11 dargestellt, so dass die Ausnehmung 60 als Führung für die Randbereiche des Einsatzes erkennbar ist. Analog zu Figur 4 sind die Einbuchtungen 18 und 19 dargestellt, die mit den Durchgangsöffnungen 49 der Führungshülsen 3 und 4 bei eingesetztem Einsatz 11 fluchten.

Erfindungsgemäß wird eine günstig herstellbare und dennoch leichte und sichere Rückenlehne mit aufsetzbarer und entnehmbarer Kopfstütze zur Verfügung gestellt, wobei die Kopfstütze gewünschtenfalls auch höhenverstellbar ist. Die sonst üblichen Kunststoffführungshülsen für die Tragstangen, die bei herkömmlichen Kraftfahrzeugsitzen in der Rückenlehne angeordnete metallene Führungshülsen eingesetzt werden, sind einstückig in den Einsatz eingeformt, so dass nur noch wenige Teile hergestellt und zusammengesetzt werden müssen. Es werden lediglich noch die Federelemente (nicht dargestellt) und die Verstellsicherung 50 für die Arretierung der Kopfstütze 8 benötigt. Der Verstellsicherung 50 ist bevorzugt ein Bedienelement, beispielsweise in Form eines Tasters, zugeordnet, über dessen Betätigung eine Höhenverstellung der Kopfstütze 8 bewirkbar ist.

Der Einsatz lässt sich allein durch eine Rastierung und insbesondere durch Schweißen sichern, wobei das Verschweißen mit dem Kunststoffkörper vorteilhaft durch Ultraschallschweißen erfolgt. Bei einem Verschweißen kommt der Einsatz mit nur einem Flansch (36 und 37) aus, wobei der Einsatz hierbei vorteilhaft von der Vorderseite 17 her an den Kunststoffkörper 2 gesetzt ist.

### Bezugszeichenliste

- 1: Rückenlehne
- 2: Kunststoffkörper
- 3, 4, 5: Führungshülsen
- 6, 7: Tragstange
- 8: Kopfstütze
- 9: oberer Endabschnitt
- 10, 20: Aussparung
- 11, 21: Einsatz
- 12, 13, 22, 23: Randbereich (des Einsatzes)
- 14, 15, 24, 25: Randbereich (des Kunststoffkörpers)
- 16: Rastverbindung
- 17: Vorderseite
- 18, 19: Einbuchtung
- 31, 32: untere Enden
- 33: Anschlagpunkte
- 34: Auswölbungen
- 35: Ausformungen
- 36, 37: vordere Flansche
- 38, 39: hintere Flansche
- 40, 41, 42, 43: Vorsprünge
- 44, 45, 46, 47: Abstellungen
- 48: unterer Randbereich
- 49: Durchgangsöffnungen
- 50: Verstellsicherung
- 60: Ausnehmung

## Patentansprüche

1. Rückenlehne (1) eines Kraftfahrzeugsitzes mit einem Kunststoffkörper (2), der überwiegend die Form der Rückenlehne (1) bestimmt und/oder überwiegend zur Stabilität der Rückenlehne (1) beiträgt, und mindestens einer Führungshülse (3, 4; 5) für eine Tragstange (6, 7) einer Kopfstütze (8), wobei der Kunststoffkörper (2) an seinem oberen Endabschnitt (9) mindestens eine Aussparung (10; 20) aufweist, in der ein Einsatz (11; 21) befestigt ist, in dem die mindestens eine Führungshülse (3, 4; 5) sitzt, **dadurch gekennzeichnet, dass** der Einsatz (11; 21) und die mindestens eine Führungshülse (3, 4; 5) einstückig aus einem Kunststoff ausgebildet sind.

2. Rückenlehne (1) nach Anspruch 1, **dadurch gekennzeichnet, dass** der Kunststoffkörper (2) ein Blasformkörper ist.

3. Rückenlehne (1) nach Anspruch 1 oder 2, **dadurch gekennzeichnet, dass** mindestens ein Randbereich (12, 13; 22, 23) des Einsatzes (11; 21) überlappend mit dem zu der Aussparung (10; 20) hin gerichteten Randbereich (14, 15; 24, 25) des Kunststoffkörpers (2) verbunden ist oder mindestens ein zu der Aussparung (10;20) hin gerichteter Randbereich (14, 15, 24, 25) des Kunststoffkörpers (2) überlappend mit mindestens einem Randbereich (12, 13, 22, 23) des Einsatzes (11, 21) verbunden ist.

4. Rückenlehne (1) nach Anspruch 3, **dadurch gekennzeichnet, dass** der Randbereich (12, 13; 22, 23) des Einsatzes (11; 21) und/oder der Randbereich (14, 15; 24, 25) des Kunststoffkörpers (2) als Flansch ausgebildet ist.

5. Rückenlehne (1) nach Anspruch 3 oder 4, **dadurch gekennzeichnet, dass** mindestens einer der Randbereiche (12, 13; 22, 23) den mit ihm befestigten anderen Randbereich (14, 15; 24, 25) umfasst.

6. Rückenlehne (1) nach Anspruch 5, **dadurch gekennzeichnet, dass** der umfasste Randbereich (14, 15; 24, 25) eine Rast (16) aufweist.

7. Rückenlehne (1) nach einem der Ansprüche 1 bis 3, **dadurch gekennzeichnet, dass** mindestens ein zu der Aussparung (10;20) hin gerichteter Randbereiche (14, 15; 24, 25) des Kunststoffkörpers (2) eine Ausnehmung (60) aufweist, in die mindestens ein Randbereich (12, 13; 22, 23) des Einsatzes (11; 21) eingreift.

8. Rückenlehne (1) nach einem der vorhergehenden Ansprüche, **dadurch gekennzeichnet, dass** der Einsatz (11; 21) mit dem Kunststoffkörper (2) verschweißt, verklebt und/oder mit einem Durchtrittsmittel verbunden ist.

9. Rückenlehne (1) nach einem der vorhergehenden Ansprüche, **dadurch gekennzeichnet, dass** die Vorderseite (17) des Kunststoffkörpers (2) unter der Führungshülse (3, 4; 5) eine längliche Einbuchtung (18, 19) zur Aufnahme der Tragstange (6, 7) hat.

10. Rückenlehne (1) nach einem der vorhergehenden Ansprüche, **dadurch gekennzeichnet, dass** der Einsatz (11, 21) zwei Führungshülsen (3, 4) aufweist.

11. Verfahren zum Herstellen einer Rückenlehne (1) gemäss Anspruch 1 mit den Schritten
- Formen eines schmelzflüssigen Kunststoffschlauchs;
- Einklemmen des schmelzflüssigen Kunststoffschlauchs in einer Form, deren Hohlraum im Wesentlichen die Gestalt der Rückenlehne (1) bestimmt;
- Aufblasen des schmelzflüssigen Kunststoffschlauchs in der Form und Abkühlen lassen unter Bildung eines Kunststoffkörpers (2),
wobei die Form so ausgebildet ist, dass sie an einem späteren oberen Endabschnitt der Rückenlehne (1) eine Aussparung (10; 20) bildendes Schlauchmaterial aus dem Kunststoffschlauch abklemmt oder verschiebt; **gekennzeichnet durch**
- Befestigen eines Einsatzes (11, 21) für eine Tragstange (6, 7) einer Kopfstütze (8) in der Aussparung (10, 20), wobei der Einsatz (11, 21) und die mindesten eine Führungshülse (3, 4; 5) einstückig aus einem Kunststoff ausgebildet sind.

## Claims

1. Backrest (1) of a motor vehicle seat, having a plastics element (2) which predominantly determines the shape of the backrest (1) and/or predominantly contributes towards the stability of the backrest (1), and at least one guide sleeve (3, 4; 5) for a support bar (6, 7) of a headrest (8), wherein the plastics element (2) on the upper end portion (9) thereof has at least one clearance (10; 20) in which an insert (11; 21) in which the at least one guide sleeve (3, 4; 5) sits is fastened, **characterized in that** the insert (11; 21) and the at least one guide sleeve (3, 4; 5) are configured integrally from a plastics material.

2. Backrest (1) according to Claim 1, **characterized in that** the plastics element (2) is a blow-moulded element.

3. Backrest (1) according to Claim 1 or 2, **characterized in that** at least one peripheral region (12, 13; 22, 23) of the insert (11; 21) is connected in an overlapping manner to that peripheral region (14, 15; 24, 25) of the plastics element (2) that is directed towards the clearance (10; 20), or at least one peripheral region (14, 15, 24, 25) of the plastics element (2) that is directed towards the clearance (10; 20) is connected in an overlapping manner to at least one peripheral region (12, 13, 22, 23) of the insert (11, 21).

4. Backrest (1) according to Claim 3, **characterized in that** the peripheral region (12, 13; 22, 23) of the insert (11; 21) and/or the peripheral region (14, 15; 24, 25) of the plastics element (2) are/is configured as a flange.

5. Backrest (1) according to Claim 3 or 4, **characterized in that** at least one of the peripheral regions (12, 13; 22, 23) comprises that other peripheral region (14, 15; 24, 25) that is fastened thereto.

6. Backrest (1) according to Claim 5, **characterized in that** the comprised peripheral region (14, 15; 24, 25) has a latch (16).

7. Backrest (1) according to one of Claims 1 to 3, **characterized in that** at least one peripheral region (14, 15; 24, 25) of the plastics element (2) that is directed towards the clearance (10; 20) has a recess (60) in which at least one peripheral region (12, 13; 22, 23) of the insert (11; 21) engages.

8. Backrest (1) according to one of the preceding claims, **characterized in that** the insert (11; 21) is welded and/or adhesively bonded to the plastics element (2), and/or is connected by way of a penetration means.

9. Backrest (1) according to one of the preceding claims, **characterized in that** the front side (17) of the plastics element (2) below the guide sleeve (3, 4; 5) has an elongate concavity (18, 19) for receiving the support bar (6, 7).

10. Backrest (1) according to one of the preceding claims, **characterized in that** the insert (11, 21) has two guide sleeves (3, 4).

11. Method for producing a backrest (1) according to Claim 1, said method comprising the steps of:
- forming a fusible plastics tube;
- jamming the fusible plastics tube in a mould, the cavity of the latter determining substantially the design of the backrest (1);
- inflating the fusible plastics tube in the mould and leaving said fusible plastics tube to cool, while forming a plastics element (2),
wherein the mould is configured such that the latter on a later upper end portion of the backrest (1) disconnects or displaces from the plastics tube a tubular material that forms a clearance (10; 20); **characterized by**
- fastening an insert (11, 21) for a support bar (6, 7) of a headrest (8) in the clearance (10, 20), wherein the insert (11, 21) and the at least one guide sleeve (3, 4; 5) are configured integrally from a plastics material.

## Revendications

1. Dossier (1) d'un siège de véhicule à moteur avec un corps en matière plastique (2), qui détermine de manière prépondérante la forme du dossier (1) et/ou qui contribue de manière prépondérante à la stabilité du dossier (1), et au moins un fourreau de guidage (3, 4; 5) pour une tige de support (6, 7) d'un appuie-tête (8), dans lequel le corps en matière plastique (2) présente à sa partie d'extrémité supérieure (9) au moins une découpe (10; 20) dans laquelle est fixé un insert (11; 21), dans lequel se trouve ledit au moins un fourreau de guidage (3, 4; 5), **caractérisé en ce que** l'insert (11; 21) et ledit au moins un fourreau de guidage (3, 4; 5) sont formés d'une seule pièce en une matière plastique.

2. Dossier (1) selon la revendication 1, **caractérisé en ce que** le corps en matière plastique (2) est un corps moulé par soufflage.

3. Dossier (1) selon la revendication 1 ou 2, **caractérisé en ce qu'**au moins une région de bord (12, 13; 22, 23) de l'insert (11; 21) est assemblée avec recouvrement à la région de bord (14, 15; 24, 25) du corps en matière plastique (2) orientée vers la découpe (10; 20) ou au moins une région de bord (14, 15, 24, 25) du corps en matière plastique (2) orientée vers la découpe (10; 20) est assemblée avec recouvrement à au moins une région de bord (12, 13, 22, 23) de l'insert (11, 21).

4. Dossier (1) selon la revendication 3, **caractérisé en ce que** la région de bord (12, 13; 22, 23) de l'insert (11; 21) et/ou la région de bord (14, 15; 24, 25) du corps en matière plastique (2) est réalisée en forme d'aile.

5. Dossier (1) selon la revendication 3 ou 4, **caractérisé en ce qu'**au moins une des régions de bord (12, 13; 22, 23) encadre l'autre région de bord (14, 15; 24, 25) qui lui est fixée.

6. Dossier (1) selon la revendication 5, **caractérisé en ce que** la région de bord encadrée (14, 15; 24, 25) présente un dispositif d'arrêt (16).

7. Dossier (1) selon l'une quelconque des revendications 1 à 3, **caractérisé en ce qu'**au moins une des régions de bord (14, 15; 24, 25) du corps en matière plastique (2) orientée vers la découpe (10; 20) présente un évidement (60), dans lequel s'engage au moins une région de bord (12, 13; 22, 23) de l'insert (11; 21).

8. Dossier (1) selon l'une quelconque des revendications précédentes, **caractérisé en ce que** l'insert (11; 21) est soudé, collé et/ou assemblé par un moyen traversant au corps en matière plastique (2).

9. Dossier (1) selon l'une quelconque des revendications précédentes, **caractérisé en ce que** le côté avant (17) du corps en matière plastique (2) comporte en dessous du fourreau de guidage (3, 4; 5) un creux allongé (18, 19) destiné à contenir la tige de support (6, 7).

10. Dossier (1) selon l'une quelconque des revendications précédentes, **caractérisé en ce que** l'insert (11, 21) présente deux fourreaux de guidage (3, 4).

11. Procédé de fabrication d'un dossier (1) selon la revendication 1, comprenant les étapes suivantes:
- former un tuyau en matière plastique fondue;
- enfermer le tuyau en matière plastique fondue dans un moule, dont la cavité détermine essentiellement la forme du dossier (1);
- souffler le tuyau en matière plastique fondue dans le moule et laisser refroidir avec formation d'un corps en matière plastique (2),
dans lequel le moule est configuré de telle manière qu'il libère ou déplace à partir du tuyau en matière plastique de la matière du tuyau formant une découpe (10; 20) à une partie d'extrémité ultérieurement supérieure du dossier (1);
**caractérisé par** l'étape:
- fixer un insert (11, 21) pour une tige de support (6, 7) d'un appuie-tête (8) dans la découpe (10, 20), dans lequel l'insert (11, 21) et ledit au moins un fourreau de guidage (3, 4; 5) sont formés d'une seule pièce en une matière plastique.
